Europäisches Patentamt

European Patent Office

Office européen des brevets

(11) Publication number: 0 367 128 A2

# EUROPEAN PATENT APPLICATION

(21) Application number: 89119957.2

(22) Date of filing: 27.10.89

(51) Int. Cl.5 **A23L 1/308 , A23L 1/172 , C11B 1/10**

(30) Priority: 31.10.88 JP 275419/88

(43) Date of publication of application:
09.05.90 Bulletin 90/19

(84) Designated Contracting States:
BE CH DE FR GB IT LI NL SE

(71) Applicant: IDEMITSU PETROCHEMICAL CO.
LTD.
1-1, Marunouchi 3-chome Chiyoda-ku
Tokyo(JP)

(72) Inventor: Yamaguchi, Katsuhisa
IDEMITSU PETROCHEMICAL CO, LTD No. 1-1,
Shingu-cho
Tokuyama-shi Yamaguchi-ken(JP)
Inventor: Yamaguchi, Magoichi
No. 2954, Imaizumi
Fuji-shi Shizuoka-ken(JP)

(74) Representative: Türk, Gille, Hrabal
Brucknerstrasse 20
D-4000 Düsseldorf 13(DE)

(54) Method for the preparation of defatted corn germs.

(57) Indian corn germs can be efficiently de-fatted and deodorized by extracting the oleaginous materials with carbon dioxide in a super-critical state as the extractant at a temperature of 30 to 80 °C under a pressure of 80 to 500 kg/cm²G with admixture of 1 to 30% by weight of ethyl alcohol as an extraction aid. The thus highly de-fatted and deodorized corn germs are useful as a base material of dietary fibers as a constituent of healthy food.

FIG. 1

# METHOD FOR THE PREPARATION OF DE-FATTED CORN GERMS

## BACKGROUND OF THE INVENTION

The present invention relates to a method for the preparation of de-fatted germs of corn, i.e. Indian corn. More particularly, the invention relates to a method for the preparation of highly de-fatted and highly deodorized corn germs suitable as a raw material of dietary fibers.

De-fatted corn germs are highlighted in recent years as a raw material of dietary fibers used as an important constituent of healthy food. De-fatted corn germs are produced by de-fatting or extracting oleaginous matter from raw corn germs. Several methods have been proposed and are practiced for the de-fatting treatment of raw corn germs by using different extractants. For example, Japanese Patent Kokai 61-28595 teaches a method in which raw corn germs are extracted with carbon dioxide in a super-critical state as the extractant. This method, however, is not quite satisfactory as a method for the preparation of de-fatted corn germs since the method has been developed for the preparation of corn oil as the principal product. Namely, de-fatting of the de-fatted corn germs prepared by this method is usually not high enough and the product sometimes has a relatively strong unpleasant odor. Therefore, the de-fatted corn germ product prepared by this method is not suitable as such as a raw material of dietary fibers. In view of the inherent advantages obtained by the extraction method using carbon dioxide as the extractant, it is eagerly desired to develop an improved method for the de-fatting treatment of corn germs using carbon dioxide as the extractant by which corn germs can be highly de-fatted and completely deodorized to give a de-fatted product usable as a raw material of dietary fibers.

## SUMMARY OF THE INVENTION

The present invention accordingly has an object to provide a novel and improved method for the preparation of de-fatted corn germs by using carbon dioxide as the extractant without the above described problems and disadvantages in the prior art method to give a de-fatted corn germ product which as such can be used as a raw material of dietary fibers.

Thus, the method of the present invention for the preparation of de-fatted corn germs comprises: extracting oleaginous materials from raw corn germs with carbon dioxide in a super-critical state as the extractant with admixture of ethyl alcohol as an extraction aid.

## BRIEF DESCRIPTION OF THE DRAWINGS

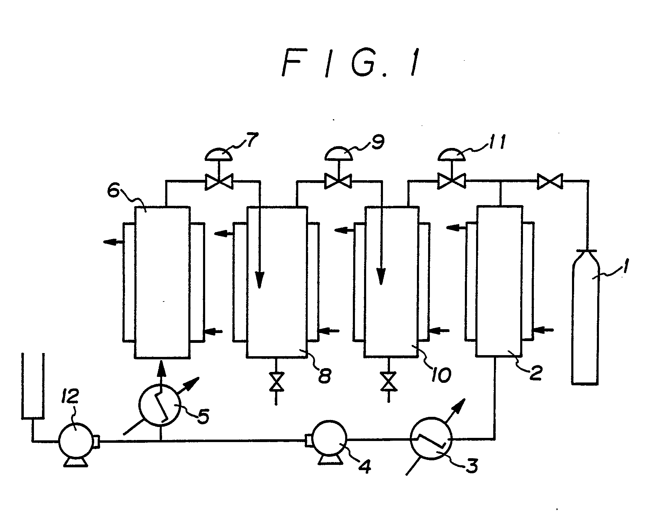

Figure 1 is a flow chart illustrating the process of the de-fatting treatment of corn germs according to the method of the present invention.

## DETAILED DESCRIPTION OF THE PREFERRED EMBODIMENTS

Extraction of oleaginous materials in a super-critical state of the extractant fluid is an established technology and several compounds can be used as the extractant fluid in such a process including carbon dioxide, ethane, nitrogen dioxide and the like, of which carbon dioxide is preferred in respect of the low cost and safety to the human health when the extractant is used in the treatment of food. Different from conventional methods for the extraction of oleaginous materials from raw corn germs using carbon dioxide as the extractant, the extractant used in the inventive method is carbon dioxide admixed with ethyl alcohol as an extraction aid. Although several organic solvents other than ethyl alcohol such as n-hexane, acetone, methyl alcohol and the like also serve as an extraction aid, it has been found that ethyl alcohol has the highest efficiency in respect of the de-fatting and deodorization effect and is preferable in respect of safety to human health since the material subjected to the extraction treatment is a raw material of food.

The corn germs subjected to the de-fatting treatment according to the inventive method can be obtained by separating from grains of Indian corn in a conventional procedure such as the wet-milling method, dry-milling method and the like. Although corn germs as separated from grains of Indian corn can be subjected to the de-fatting treatment according to the inventive method, it is usual or preferable that dried corn germs are first subjected to oil expression by a conventional method such as compression or extraction with hexane prior to the de-fatting treatment according to the inventive method. Such oil-depleted corn germs are colored and have a rancid odor so that they can hitherto be utilized mostly only as a livestock feed.

Since the de-fatting treatment in the inventive method is conducted in a super-critical state of carbon dioxide, the extraction is performed under a pressure in the range from 80 to 500 kg/cm²G or, preferably, in the range from 250 to 400 kg/cm²G at a temperature in the range from 30 to 80 °C or, pre- , ferably, in the range from 35 to 50 °C. The amount of ethyl alcohol as the extraction aid is in the range from 1 to 30% by weight or, preferably, in the range from 3 to 15% by weight based on the overall amount of the extractant composed of carbon dioxide and ethyl alcohol.

In the following, the method of the present invention is described in detail with reference to the accompanying drawing which illustrates a flow chart of the process to practice the inventive method.

In the flow chart of the super-critical gas extraction process illustrated in Figure 1, carbon dioxide supplied from the gas cylinder 1 and filling the liquid carbon dioxide receiver 2 is chilled in the chiller 3 and compressed to have a specified pressure by means of the pump 4 followed by temperature regulation to a specified extraction temperature through the heater 5 to be brought into a super-critical state before it is introduced into the extraction vessel 6 which is filled with corn germs either before or after oil expression as the raw material in the de-fatting treatment. The corn germs are contacted in the extraction vessel 6 with the carbon dioxide in a super-critical state containing ethyl alcohol so that the oleaginous matter therein is extracted by the extractant. The carbon dioxide extractant containing the extracted oleaginous matter is introduced into the primary separation vessel 8 through the pressure-reducing valve 7 and the oleaginous matter is isolated from the carbon dioxide extractant. The carbon dioxide coming out of the primary separation vessel 8 is, after further reduction of the pressure through the pressure-reducing valve 9, introduced into the secondary separation vessel 10 where it is freed from remaining oleaginous materials. After further reduction of the pressure through the pressure-reducing valve 11, the carbon dioxide is returned to the liquid carbon dioxide receiver 2 to be reused. Ethyl alcohol is introduced into the extraction vessel 6 as mixed with carbon dioxide in a specified proportion after increase of the pressure to the specified value by means of the pump 12. After completion of the extraction, ethyl alcohol in the extractant is separated from carbon dioxide in the above mentioned primary separation vessel 8 and/or secondary separation vessel 10.

The corn germs after de-fatting in the above described manner are recovered from the extraction vessel 6 after depressurization to atmospheric pressure. When the inventive method for de-fatting is applied to corn germs after oil expression beforehand, the de-fatted corn germs obtained in the above described manner contains only 0.3% by weight or smaller of the remaining oleaginous matter and are almost completely from unpleasant odor unavoidable in corn germs de-fatted in conventional methods. The corn germs de-fatted by the method of the present invention contain from 20 to 25% by weight of protein and from to 60% by weight of fibrous materials (NDF) along with trace amounts of other physiologically active substances so that they can be used quite satisfactorily as a raw material of dietary fibers. More advantageously, the de-fatted corn germs can absorb water in an amount of twice or larger as compared with the water absorption in dietary fibers of other kinds. The term of "NDF" mentioned above is defined as the total amount of the cellulose, hemicellulose and lignin contained in the food and can be determined according to the method described in Journal of the Association of Official Agricultural Chemists, volume 46, pages 825-829 (1963).

Accordingly, the de-fatted corn germs obtained by the inventive method can be used as an additive in various kinds of food preparations such as cookies, breads, muffins, doughnuts, sponge cakes, ice creams, whipped creams, soups, drinks and the like.

In the following, the method of the present invention is described in more detail by way of examples.


Example 1.

An extraction vessel of 4 liter capacity was filled with 500 g of yellowish brown corn germs containing about 10% by weight of the oleaginous material after expression of oil by compression, which were subjected to the extraction treatment in the process of the flow chart illustrated in Figure 1 at a temperature of 40 °C under a pressure of 250 kg/cm² using carbon dioxide as the extractant admixed with 5% by weight of ethyl alcohol as an extraction aid. The extractant coming out of the extraction vessel was introduced into the primary separation vessel where carbon dioxide was separated from the extracted matter at a temperature of 32 °C under a pressure of 80 kg/cm² to give about 54 g of the oleaginous matter containing a small amount of ethyl alcohol. The ethyl alcohol was separated from the oleaginous matter and other non-volatile matters in the secondary separation vessel at a temperature of 15 °C under a pressure of

40 kg/cm$^2$.

The thus obtained de-fatted corn germs had been decolorized to have a brownish white color and contained 0.29% by weight of the oleaginous material. The de-fatted corn germs were subjected to the organoleptic test for the odor by panel members who unanimously gave an evaluation that almost no unpleasant odor could be felt. Table 1 below gives the result of the water absorption test of the thus obtained de-fatted corn germs.

Comparative Example 1.

The extraction vessel was filled with 1 kg of pulverized yellowish white corn germs before oil expression obtained by the dry milling method and containing about 25% by weight of the oleaginous matter and the extraction treatment thereof was conducted in the same process as that of the flow chart illustrated in Figure 1 at a temperature of 38 °C under a pressure of 350 kg/cm$^2$ using carbon dioxide as the extractant admixed with 3% by weight of n-hexane as the extraction aid. The extractant containing the extracted oleaginous matter was introduced into the primary separation vessel where carbon dioxide was separated from the oleaginous matter at a temperature of 30 °C under a pressure of 60 kg/cm$^2$ to give the oleaginous matter dissolved in n-hexane. The yield of the oleaginous matter was 242 g after evaporation and removal of n-hexane.

The thus obtained de-fatted corn germs had been decolorized to have a pale yellowish white color and contained 0.67% by weight of the oleaginous matter. The result of the organoleptic test for the unpleasant odor was that a slight odor was felt by the panel members. The water absorptivity of the thus obtained de-fatted corn germs is shown in Table 1.

Example 2.

A de-fatting treatment of corn germs was undertaken in the process under the same conditions of extraction and separation as in Example 1 by filling the extraction vessel with 900 g of pulverized corn germs obtained by the wet-milling method and containing about 50% by weight of oleaginous materials without oil expression to give 467 g of an oily extract from the primary separation vessel.

The thus obtained de-fatted corn germs had been fully decolorized and deodorized and contained 0.41% by weight of the remaining oleaginous matter. The water absorptivity of the de-fatted corn germs is shown in Table 1 together with the results obtained with the de-fatted corn germs prepared in Example 1 and Comparative Example 1 as well as with several other agricultural products.

The water absorptivity shown in Table 1 below was determined by the method of sedimentation volume of water absorption test according to the following procedure. Thus, a suspension of 5 g of the sample in 100 ml of water was kept standing in a graduated cylinder of 100 ml capacity at room temperature. After 24 hours of standing, the sedimentation volume was determined by reading the graduation line at the interface between the clear upper layer and the lower layer of suspension and the sedimentation volume divided by 5 was recorded as the water absorption per gram of the sample.

Table 1

| Sample | Water absorption, ml |
|---|---|
| Example 1 | 11.1 |
| Example 2 | 11.0 |
| Comparative Example 1 | 5.5 |
| Wheat bran | 5.1 |
| Soybean husks | 6.7 |
| Beet draffs | 7.1 |
| Yellow peas | 5.6 |

4

Comparative Examples 2 to 4.

The experimental procedures in these comparative examples were each substantially the same as in Example 1, Example 2 and Comparative Example 1 excepting omission of the extraction aid, i.e. ethyl alcohol or n-hexane. The de-fatted corn germs contained 1.32% by weight (Comparative Example 2), 1.51% by weight (Comparative Example 3) or 1.56% by weight (Comparative Example 4) of the oleaginous material. The de-fatted corn germs obtained in each of these comparative examples had a somewhat darkened color tone and an unpleasant odor specific in corn germs. The water absorptivity of the de-fatted corn germs was 8.8 ml, 8.1 ml and 4.0 ml in Comparative Examples 2, 3 and 4, respectively.

As is described above, the present invention provides an efficient method for the preparation of highly de-fatted and highly deodorized corn germs by using extractant materials absolutely without any problems of safety against human health so that the de-fatted corn germs obtained by the inventive method are useful as a base material of dietary fibers.

## Claims

1. A method for the preparation of de-fatted corn germs which comprises extracting oleaginous materials from raw corn germs with carbon dioxide in a super-critical state as the extractant with admixture of ethyl alcohol as an extraction aid.

2. The method for the preparation of de-fatted corn germs as claimed in claim 1 wherein the extraction of the oleaginous materials from the raw corn germs is conducted at a temperature in the range from 30 to 80 $^\circ$C under a pressure in the range from 80 to 500 kg/cm$^2$G.

3. The method for the preparation of de-fatted corn germs as claimed in claim 1 wherein the amount of ethyl alcohol is in the range from 1 to 30% by weight based on the amount of carbon dioxide.

# F I G. 1